# EUROPEAN PATENT APPLICATION

(11) **EP 2 924 269 A2**
(43) Date of publication of application: **30.09.2015**
(21) Application number: 15158818.3
(22) Date of filing: 12.03.2015
(51) Int. Cl.: F02D 41/30, F02P 19/02, F02M 25/07, F02D 35/02

(54) **APPARATUS AND METHOD FOR CONTROLLING A DIESEL ENGINE OPERATING WITH PREMIXED COMBUSTION**

(30) Priority: 26.03.2014 JP 2014063746
(71) Applicant: NGK Spark Plug Co., Ltd., Nagoya-shi Aichi 467-8525 (JP)
(72) Inventor: Tanaka, Takafumi, Nagoya-shi, Aichi 467-8525 (JP); Nakamura, Toshiyuki, Nagoya-shi, Aichi 467-8525 (JP); Okinaka, Manabu, Nagoya-shi, Aichi 467-8525 (JP)
(74) Representative: Grünecker Patent- und Rechtsanwälte PartG mbB

(57) **Abstract**

To decrease combustion noise, etc. of a diesel engine(10) at the time of transition to premixed combustion, the cylinder pressure of the diesel engine (10) is detected, and a parameter which is related to change in the cylinder pressure of the diesel engine is computed on the basis of the detected cylinder pressure. The fuel injection timing at the time when combustion in the diesel engine is switched to premixed combustion is controlled such that the parameter falls within a target range.

## Description

### [Technical Field]

The present invention relates to control of a diesel engine.

### [Background Art]

Conventionally, there has been proposed a technique for controlling a diesel engine in a combustion form (mode) corresponding to the load of the engine (see, for example, the below-listed Patent Document 1). Combustion forms (also called "combustion modes") of fuel employed in such engine control include a diffusion combustion mode for combusting fuel while injecting the fuel into a combustion chamber, and a premixed combustion mode (also called "homogeneous-charge compression combustion mode") for mixing fuel and air within a combustion chamber before igniting the fuel. In general, the diffusion combustion mode is used when the engine is in a high-load state, and the premixed combustion mode is used when the engine is in a low-load state. Also, in the premixed combustion, EGR control for re-circulating a large amount of exhaust gas to the intake side is used at the same time. It has been known that the amounts of NOx, soot, etc. can be reduced by switching the combustion mode to the premixed combustion mode.

When the combustion mode is switched from the diffusion combustion mode to the premixed combustion mode or switched from a motoring state to the premixed combustion mode, nitrogen oxide (NOx), soot (soot itself or opacity of exhaust gas), combustion noise, etc. may be generated or their amounts may increase. In order to solve the above-described problems, in the below-listed Patent Document 2, fuel injection is divided into pilot injection and main injection, and an increase or decrease in the fuel injection amount during such a transition period is finely adjusted.

### [Prior Art Documents]

### [Patent Documents]

[Patent Document 1] Japanese Patent Application Laid-Open *(kokai)* No. 2007-211612
[Patent Document 2] Japanese Patent Application Laid-Open (*kokai*) No. 2010-236459

### [Summary of the Invention]

### [Problem to be Solved by the Invention]

It has been known that when such premixed combustion takes place in a diesel engine, fuel injection timing and EGR amount greatly affect the combustion. However, immediately after the combustion mode has been switched to the premixed combustion mode, the EGR amount cannot be controlled properly due to, for example, a temporary delay in introduction of exhaust gas. Therefor, it has been impossible to find a parameter for properly controlling the fuel injection timing.

Also, conceivably, it is possible to predict the ratio of EGR or the oxygen concentration of intake gas through use of a model and on the basis of pieces of information from an intake pressure sensor, an air flow sensor, an exhaust oxygen sensor, an intake temperature sensor, and/or a like sensor, and control, on the basis of the predicted value, the fuel injection timing at the time when the combustion mode is switched to the premixed combustion mode. However, changes in the properties of fuel and the temperature of cooling water, and deterioration of various sensors with time are pieces of information which are difficult to predict. Since initial margins must be provided for these pieces of information, the oxygen concentration of intake gas, etc. have been impossible to predict accurately through use of the model-based method. Therefore, it has been difficult to accurately control the fuel injection timing at the time of switching to the premixed combustion mode even when the above-mentioned prediction is performed through use of a model.

### [Means for Solving the Problem]

The present invention has been accomplished so as to solve, at least partially, the above-described problem, and the present invention can be embodied in the following modes.

(1) According to a first mode of the present invention, a diesel engine control apparatus for controlling fuel injection timing of a diesel engine is provided. This diesel engine control apparatus comprises a cylinder pressure sensor for detecting cylinder pressure of the diesel engine; a parameter computation unit for computing a parameter which is related to change in the cylinder pressure of the diesel engine obtained from a signal output from the cylinder pressure sensor; and a control unit for controlling the fuel injection timing at the time when combustion in the diesel engine is switched to premixed combustion such that the parameter falls within a target range.

According to this diesel engine control apparatus, the fuel injection timing at the time when combustion in the diesel engine is switched to premixed combustion is controlled such that a parameter related to change in the cylinder pressure of the diesel engine falls within a target range. According to the knowledge of the present inventors, change in the cylinder pressure of the diesel engine has a strong correlation with the ratio of EGR or the oxygen concentration of intake gas and the fuel injection timing. Accordingly, by computing the parameter related to change in the cylinder pressure of the diesel engine, and controlling the fuel injection timing such that the parameter falls within the target range, at least one index of combustion of the diesel engine, such as combustion noise, NOx, soot, etc., can be suppressed, as compared with the case of a conventional diesel engine, at the time of switching to the premixed combustion.

(2) In such a diesel engine control apparatus, the switching to the premixed combustion may be performed in a state in which diffusion combustion is performed or in a motoring state. This is because a transition state in which the amount of EGR is unstable occurs when the switching to the premixed combustion is performed in either state. In such a transition state, the fuel injection timing control based on the parameter related to change in the cylinder pressure is preferred, because the fuel injection timing control can suppress at least one of the above-mentioned indexes of combustion such as combustion noise.

(3) In the above-described diesel engine control apparatus, the parameter computation unit may compute, as the parameter, a mass fraction burned, and a pressure increase rate maximum value of the cylinder pressure or a heat release rate maximum value on the basis of the signal from the cylinder pressure sensor; and the control unit may perform fuel injection timing control based on the mass fraction burned when the fuel injection timing converges as a result of control based on the pressure increase rate maximum value or the heat release rate maximum value.

This diesel engine control apparatus performs the control based on the pressure increase rate maximum value or the heat release rate maximum value, and, when the fuel injection timing converges as a result of that control, the diesel engine control apparatus performs the fuel injection timing control based on the mass fraction burned. Therefore, the fuel injection timing control can be continued even when the fuel injection timing converges as a result of the control based on the pressure increase rate maximum value or the heat release rate maximum value.

(4) According to a second mode of the present invention, another diesel engine control apparatus for controlling fuel injection timing of a diesel engine is provided. This diesel engine control apparatus comprises a cylinder pressure sensor for detecting cylinder pressure of the diesel engine; and a control unit for controlling the fuel injection timing on the basis of a pressure increase rate maximum value or a heat release rate maximum value obtained from a signal from the cylinder pressure sensor.

This diesel engine control apparatus can perform the fuel injection timing control by using the pressure increase rate maximum value or the heat release rate maximum value obtained from the signal output from the cylinder pressure sensor. Through use of the pressure increase rate maximum value or the heat release rate maximum value, at least one of combustion noise, NOx, and soot can be suppressed.

(5) In such a diesel engine control apparatus, the control unit may control the fuel injection timing at the time when combustion in the diesel engine is switched to premixed combustion such that the pressure increase rate maximum value or the heat release rate maximum value falls within a target range. By controlling the fuel injection timing such that the pressure increase rate maximum value or the heat release rate maximum value falls within the target range, at least one of combustion noise, NOx, and soot can be suppressed properly.

(6) In such a diesel engine control apparatus, the cylinder pressure sensor may be incorporated into a glow plug provided on the diesel engine. This configuration eliminates the necessity of separately providing a cylinder pressure sensor in the cylinder, whereby the influence on combustion within the cylinder can be mitigated.

(7) When the combustion in the diesel engine is switched from diffusion combustion to premixed combustion, the glow plug may be energized such that the glow plug has a temperature of 900°C or higher. As a result of energizing the glow plug at the time of switching from the diffusion combustion to the premixed combustion, combustion is improved, and cycle variation is improved as compared with the case where the glow plug is not energized, and the range within which the fuel injection timing can be changed to cope with torque variation expands to the delay side. Therefore, a margin can be imparted to control in the diesel engine.

(8) Such a glow plug may have a temperature increase speed such that the glow plug reaches 1200°C within a period of 0.5 sec to 3 sec. The higher the elevated temperature of the glow plug, the winder the range within which the fuel injection timing can be changed to cope with torque variation. Therefore, when a glow plug which can reach 1200°C within a short period of time is used, a state in which the control has a margin can be established within a short period of time.

(9) A method for controlling fuel injection timing of a diesel engine is provided as a third mode of the present invention. This method comprises detecting cylinder pressure of the diesel engine; computing a parameter which is related to a change in the cylinder pressure of the diesel engine on the basis of the detected cylinder pressure; and controlling the fuel injection timing at the time when combustion in the diesel engine is switched to premixed combustion such that the parameter falls within a target range.

According to such a method of controlling a diesel engine, the fuel injection timing at the time when combustion in the diesel engine is switched to premixed combustion is controlled such that a parameter related to change in the cylinder pressure of the diesel engine falls within a target range. According to the knowledge of the present inventors, change in the cylinder pressure of the diesel engine has a strong correlation with the ratio of EGR or the oxygen concentration of intake gas and the fuel injection timing. Accordingly, by computing the parameter related to change in the cylinder pressure of the diesel engine, and controlling the fuel injection timing such that the parameter falls within the target range, at least one of indexes of combustion of the diesel engine, such as combustion noise, NOx, soot, etc., can be suppressed, as compared with a conventional diesel engine, at the time of switching to the premixed combustion.

(10) A method for controlling fuel injection timing of a diesel engine is provided as a fourth mode of the present invention. This method comprises detecting cylinder pressure of the diesel engine; and controlling the fuel injection timing on the basis of a pressure increase rate maximum value or a heat release rate maximum value obtained from the cylinder pressure. At least one of combustion noise, NOx, and soot can be suppressed by controlling the fuel injection timing by using the pressure increase rate maximum value or the heat release rate maximum value.

All the plurality of constituent elements of each mode of the present invention are not essential. In order to solve, partially or entirely, the above-mentioned problem or yield, partially or entirely, the effects described in the present specification, a part of the elements may be properly modified, deleted, or replaced with another new element, or the limitation thereof may be partially removed. Also, in order to solve, partially or entirely, the above-mentioned problem or yield, partially or entirely, the effects described in the present specification, a portion or all of the above-described technical features contained in one mode of the present invention may be combined with a portion or all of the above-described technical features contained in other modes of the present invention to thereby attain an independent mode of the present invention.

The present invention can be realized in various forms other than the diesel engine control apparatus. For example, the present invention can be realized in the form of, for example, a method of manufacturing the diesel engine control apparatus, a method of controlling the diesel engine control apparatus, a computer program for realizing the control method, or a non-temporary recording medium on which the computer program is recorded.

### [Brief Description of the Drawings]

[FIG. 1] Schematic diagram of a control apparatus for a diesel engine which is a first embodiment of the present invention.
[FIG. 2] Flowchart showing an engine control routine in the first embodiment.
[FIG. 3] Flowchart showing a fuel injection timing control routine in the first embodiment.
[FIG. 4] Graph showing the relation between fuel injection timing and pressure increase rate maximum value in premixed combustion with EGR ratio used as a parameter.
[FIGS. 5(A) through 5(C)] Graphs showing a control example of the first embodiment along combustion cycles.
[FIGS. 6(A) through 6(C)] Graphs showing the control example of the first embodiment along time.
[FIG. 7] Flowchart showing a fuel injection timing control routine in a second embodiment.
[FIG. 8] Graph showing the relation between fuel injection timing and MFB in premixed combustion with EGR ratio used as a parameter.
[FIGS. 9(A) through 9(C)] Graphs showing a control example of the second embodiment along combustion cycles.
[FIGS. 10(A) through 10(D)] Graphs showing the control example of the second embodiment along time.
[FIG. 11] Flowchart showing an engine control routine in a third embodiment.
[FIG. 12] Graph showing the relation between fuel injection timing and torque with an increase in temperature of a glow plug used as a parameter.
[FIG. 13] Graph showing the relation between fuel injection timing and cycle variation with an increase in temperature of a glow plug used as a parameter.

### [Modes for Carrying out the Invention]

A diesel engine control apparatus which is common among first through third embodiments of the present invention will now be described. These embodiments are realized by hardware configurations which are substantially identical with one another. The diesel engine control apparatus denoted by 100 is mainly composed of a four-cylinder, direct-injection-type diesel engine (hereinafter simply referred to as an engine) 10; an intake-exhaust system 20 which performs intake and exhaust operations, including recirculation of exhaust gas, for the engine 10; a fuel injection value 30 for supplying fuel (light oil) to the engine 10; and an ECU 70 for controlling the entire operation of the engine 10.

A. Hardware configuration of engine control apparatus:
The engine 10 includes four cylinders, and a piston is provided in each cylinder. Motion of the piston pushed downward as a result of combustion of fuel is converted to rotational motion of a crankshaft through a connecting rod. A rotational angle sensor 54 is provided to face the outer periphery of a gear wheel 11 coupled to the crankshaft, and accurately detects the rotational angle of the crankshaft (hereinafter referred to as the "crank angle CA"). The shape of the gear wheel is determined such that the top dead center TDC and bottom dead center BDC of the piston in each cylinder are also detected.

The above-mentioned fuel injection valve 30 and a glow plug 32 including a cylinder pressure sensor are provided on the cylinder head of the engine 10. Also, a water temperature sensor for detecting the temperature of cooling water and other components are provided on the engine 10. In response to an instruction from the ECU 70, the fuel injection valve 30 opens so as to inject into a cylinder of the engine 10 high-pressure fuel supplied from a fuel supply pump 24 via a common rail 26. The timing of this injection represented by a crank angle from the top dead center TDC is fuel injection timing. In general, in the diffusion combustion mode, the fuel injection is performed in the vicinity of the top dead center TDC, and in the premixed combustion mode, the fuel injection is performed before the top dead center TDC. An operation of advancing the fuel injection timing in the crank angle CA will be referred to as "controlling the fuel injection timing to the advance side," and an operation of delaying the fuel injection timing in the crank angle CA will be referred to as "controlling the fuel injection timing to the delay side (retarding the fuel injection timing)."

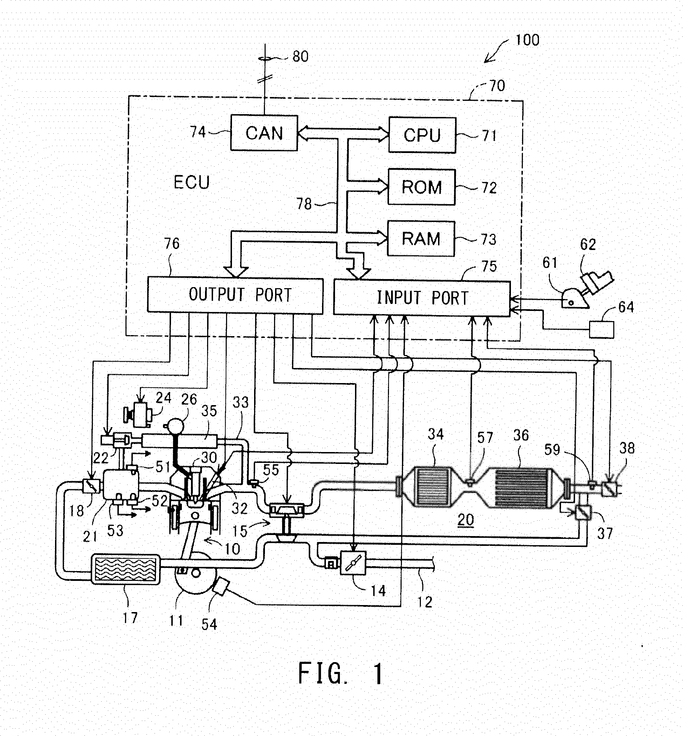

The glow plug 32, which is provided together with the fuel injection valve 30, includes a heater whose temperature reaches 900°C or higher within a short period of time when the heater is energized. The glow plug 32 is used to assist combustion or stabilize combustion at low temperature. Although a cylinder pressure sensor is incorporated into the glow plug 32, this cylinder pressure sensor is not shown in FIG. 1. The glow plug 32 has a heater portion which moves in accordance with the pressure in the cylinder (cylinder pressure) acting on the forward end of the heater portion, and a diaphragm which receives the rear end of the heater portion. A piezo element is provided on the diaphragm. When the heater portion moves due to the cylinder pressure, the diaphragm is distorted, and the resistance of the piezo element changes. The glow plug 32 having such a cylinder pressure sensor converts change in the resistance of the piezo element to an electrical signal, and outputs the electrical signal. This electrical signal is a signal corresponding to the cylinder pressure. The glow plug 32 employed in the present embodiment has a ceramic heater which is provided in the heater portion and which reaches 1200°C within a period of time shorter than that in the case of a metal heater (0.5 to 3.0 sec in the present embodiment). Even when intake gas creates a cooling environment inside the cylinder, the interior of the cylinder can be heated to a temperature of about 1200°C by the glow plug 32 within a short period of time.

Next, the intake-exhaust system 20 will be described. Oxygen is required for combustion in the engine 10, and such oxygen is derived from fresh air introduced from the outside. Fresh air is introduced from an intake pipe inlet 12 through an unillustrated air filter, and is taken into the intake-exhaust system 20 through an intake valve 14. The engine 10 takes in this fresh air and exhaust gas recirculated from an exhaust system as a result of recirculation of of exhaust gas, and uses them for combustion. Gas taken in by the engine 10 will be referred to as "intake gas." A mixture of intake gag taken into the cylinder and fuel injected from the fuel injection valve 30 will be referred to as "gas-fuel mixture."

The intake-exhaust system 20 includes a turbocharger 15, an inter cooler 17, an inter cooler passage throttle valve 18, and an intake manifold (hereinafter simply referred to as "manifold") 21 which are provided in this order from the upstream side between the intake pipe inlet 12 and the intake port of the engine 10. Meanwhile, on the downstream side of the exhaust port of the engine 10, there are provided a branch pipe 33, an exhaust side turbine of the turbocharger 15, an oxidation catalyst 34, an exhaust filter (DPF) 36, and an exhaust shutter 38. Although components on the downstream side of the exhaust shutter 38 are not illustrated, a well known muffler, etc. are provided, and exhaust gas is released to the atmosphere after being purified by the oxidation catalyst 34 and the DPF 36.

A first EGR valve 37 is provided in a branch passage that branches off at a position before the exhaust shutter 38. Since the branch passage is connected to a flow passage through which fresh air is introduced from the intake pipe inlet 12, a portion of the exhaust gas is mixed with the fresh air there. A mixture of the fresh air and the exhaust gas is introduced into the intake side passage of the turbocharger 15. The turbocharger 15 rotates the exhaust side turbine disposed in the exhaust passage extending from the engine 10 through use of the exhaust gas discharged from the engine 10. Since the exhaust side turbine is connected directly to an intake side turbine disposed on the intake side, the intake side turbine rotates and supercharges the engine 10 with the intake gas. As a result of supercharging by the turbocharger 15, the temperature of the intake gas increases due to adiabatic compression. The inter cooler 17 is provided so as to cool the intake gas. Since the intake gas (fresh air and exhaust gas) cooled by the inter cooler 17 is introduced into the engine 10 through the manifold 21, the exhaust gas is recirculated. The amount of recirculated exhaust gas can be controlled by adjusting the opening of the first EGR valve 37. This passage will be referred to as the "first EGR passage."

Meanwhile, a branch pipe 33 provided immediately after the the exhaust port of the engine 10 is connected to the manifold 21 via an EGR cooler 35 and a second EGR valve 22. This passage will be referred to as a second EGR passage for recirculating the exhaust gas from the exhaust side of the engine 10 to the intake side thereof. The EGR amount can be controlled by adjusting the opening of the second EGR valve 22 and the opening of the inter cooler passage throttle valve 18 provided immediately before the manifold 21.

A large number of sensors are provided in the above-described intake-exhaust system 20. An intake gas temperature sensor 51 for detecting the temperature of the intake gas, an intake pressure sensor 52 for detecting the intake pressure, and an oxygen concentration sensor 53 for detecting the oxygen concentration of the intake gas are provided on the manifold 21. An exhaust gas temperature sensor 55 for detecting the temperature of the exhaust gas is provided downstream of the branch pipe 33, and an opacity sensor 57 for detecting the opacity of the exhaust gas (the amount of generated soot) is provided before the DPF 36. Further, an NOx sensor 59 for detecting the amount of NOx is provided before the exhaust shutter 38. Of these sensors, the oxygen concentration sensor 53, the opacity sensor 57, the NOx sensor 59, etc. are provided so as to measure the performance of the engine control apparatus 100, which will be described later, and are not necessarily required for control of the engine 10 actually mounted on a vehicle. Other sensors may be omitted if they are not required for engine control. In the case where the various sensors such as the NOx sensor are not provided, the effects of the control apparatus of the embodiment may be confirmed by measuring various parameters through use of an exhaust gas analyzer, an opacimeter, etc. in a bench test.

The above-described various sensors and actuators such as valves are connected to the ECU 70. The ECU 70 includes a CPU 71 for performing control, a ROM 72, a RAM 73, a CAN 74 for performing communications with an in-vehicle LAN 80, an input port 75 for receiving signals from the sensors, an output port 76 for outputting drive signals to the various valves, and a bus 78 to which these elements and the ports are connected. Various sensors for detecting the operating state of the vehicle, such as an accelerator sensor 61 for detecting the depression amount of an accelerator 62 (hereinafter referred to as the "accelerator depression amount α") and a vehicle speed sensor 64, are also connected to the input port 75.

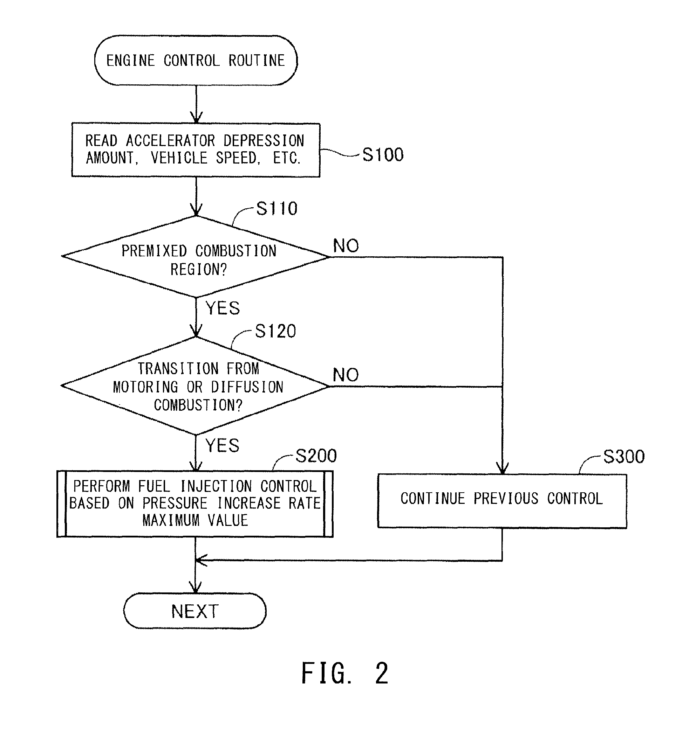

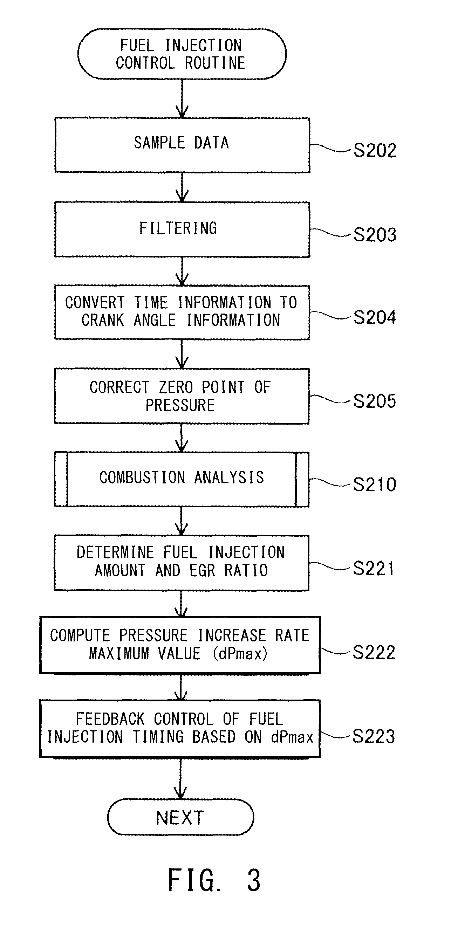

B. First embodiment:
B-1) Engine control:
   The control apparatus 100 of the first embodiment performs the processing shown in FIGS. 2 and 3 on the premise that the control apparatus 100 has the above-described hardware configuration. FIG. 2 is a flowchart showing an engine control routine. When operation of the engine 10 is started, the ECU 70 repeatedly executes the processing shown in FIG. 2. When the processing of this routine is started, the ECU 70 receives signals from the sensors such as the accelerator sensor 61 and the vehicle speed sensor 64, and reads the accelerator depression amount α, the vehicle speed V, etc. (step S100). Subsequently, the ECU 70 determines, from the accelerator depression amount α, the vehicle speed V, etc., whether or not the engine is in a region in which the engine operates in the premixed combustion mode (step S110). In general, the premixed combustion mode is employed in a low-speed/low-load region, and the diffusion combustion mode is selected in a region in which the load of the engine is high. Operation regions in which the engine operates in the premixed combustion mode may be determined in advance, and stored in the ROM 72 or the like in the form of a map.

In the case where the ECU 70 determines that the engine is in a region in which the engine is operated in the premixed combustion mode (step S110: "YES"), subsequently, the ECU 70 determines whether or not the engine is in a transition from a motoring state or a region in which the engine is operated in the diffusion combustion mode (step S120). When the engine is in a transition from the motoring state or the region in which the engine is operated in the diffusion combustion mode, this means that, up to that point in time, the engine has been in the motoring state or has been operated in the diffusion combustion mode, and the engine (engine load) has moved to the region in which the engine is operated in the premixed combustion mode, as a result of changing of the operation state of the vehicle. In the case where the ECU 70 determines that the engine is in such a transition state (step S120: "YES"), the ECU 70 performs fuel injection control on the basis of the maximum value of pressure increase rate (step S200). This control will be described in detail later.

Meanwhile, when the ECU 70 determines, from the operation state of the vehicle, that the engine is not in the region in which the engine is operated in the premixed combustion mode (step S110: "NO") or that the engine is not in a transition state although the engine is in the region in which the engine is operated in the premixed combustion mode (step S120: "NO"), the ECU 70 proceeds to step S300 so as to continue the previous control which has been performed up to that time. The expression "previous control" means that when the engine has been operated in the diffusion combustion mode, the fuel injection control in the diffusion combustion mode is continued, and when the engine has been operated in the premixed combustion mode, the fuel injection control in the premixed combustion mode is continued. Notably, since combustion in the diffusion combustion mode or the premixed combustion mode is conventionally known, it will not be described in detail. Of course, various variations are present in the same diffusion combustion mode or the same premixed combustion mode. However, the routine of FIG. 2, excluding the processing in step S200, can be applied to any control.

B-2) Feedback control of fuel injection timing:
Next, the fuel injection control in step S200 will be described. FIG. 3 is a flowchart showing a fuel injection control routine which is executed as step S200. When this routine is started, first, the ECU 70 performs sampling of data from the cylinder pressure sensor incorporated in the glow plug 32 (step S202). In actuality, the glow plug 32; i.e., the cylinder pressure sensor, is provided for each cylinder. Therefore, data from the cylinder pressure sensor obtained for each cylinder is read through the input port 75 at predetermined intervals. In step S202, the ECU 70 reads a sequence of data of the cylinder pressure sampled, at the predetermined intervals, for a cylinder in which the combustion stroke has been completed.

Next, the ECU 70 performs filtering for the read sequence of data (step S203). Specifically, the filtering is low-pass filtering for removing high frequency components (specifically, noise) contained in the data of the cylinder pressure. The low-pass filtering can be realized by processing of obtaining the simple average or moving average of a plurality of successive data sets, or processing of integrating the data in a predetermined period of time.

Since the sampled data are the data obtained at the predetermined intervals, they are read on the time axis. Therefore, the ECU 70 performs processing of converting the data to data on the crank angle through use of the crank angle CA obtained from the rotational angle sensor 54 (step S204). As will be described later, the control of fuel injection timing is performed on the basis of the crank angle CA. Therefore, processing after this point is performed on the basis of the crank angle CA.

Next, the ECU 70 performs zero point correction for pressure by using the data of the cylinder pressure obtained on the basis of the signal from the cylinder pressure sensor incorporated in the glow plug 32 (step S205). The signal from the cylinder pressure sensor contains errors such as so-called zero point drift. In view of this, when the crank angle CA shows that the piston is located at the bottom dead center (BDC), correction is performed such that the cylinder pressure at that time is used as a reference value (zero point). As a result of this processing, noise and errors (e.g., zero point drift) contained in the signal can be removed.

Subsequently, the ECU 70 performs processing for combustion analysis (step S210). In this processing, the ECU 70 performs analysis of the combustion state required to obtain:
- a fuel injection amount
- an EGR ratio, and
- the maximum value of the pressure increase rate of the cylinder pressure.

Notably, in the combustion analysis (step S210), the ECU 70 may obtain various parameters relating to combustion in addition to the maximum value dPmax of the pressure increase rate of the cylinder pressure which will be described later. For example, the ECU 70 may obtain a mass fraction burned (MFB) which will be described later or a parameter for obtaining the mass fraction burned.

Subsequently, the ECU 70 performs processing for determining the fuel injection amount q and the EGR ratio (step S221). The fuel injection amount q is determined on the basis of the required output of the engine. The ECU 70 obtains the fuel injection amount q on the basis of the negative pressure of the intake pipe, the accelerator depression amount α, the vehicle speed V, etc. Since the method of obtaining the fuel injection amount q is known, its description is omitted here.

The EGR ratio is the ratio of exhaust recirculation performed in the premixed combustion; i.e., the ratio of exhaust gas to fresh air. In general, in the case where the amount of oxygen necessary in the intake gas can be secured by performing supercharging through use of the turbocharger 15, the higher the EGR ratio, the greater the degree to which NOx can be reduced. When the combustion mode is switched from the diffusion combustion mode to the premixed combustion mode, the EGR ratio is increased to, for example, a value as high as about 80%, within a relatively short period of time, from an EGR ratio (for example, about 25%) in the diffusion combustion mode. In the present embodiment, the ECU 70 calculates the amount of oxygen required in a single cycle of the engine from the required torque, fuel injection amount, etc., in the premixed combustion mode, and obtains the maximum value of the EGR ratio which can secure a sufficient amount of oxygen and which can suppress the generation of soot, from a map or the like.

After obtaining the fuel injection amount q and the EGR ratio in this manner, the ECU 70 performs processing for computing, on the basis of the data of the cylinder pressure, the maximum value dPmax of the pressure increase rate of the cylinder pressure in each combustion cycle of a single cylinder (step S222). The pressure increase rate is not the absolute value of the pressure, but is the ratio of pressure increase per unit crank angle CA. In general, the pressure increase rate assumes the largest value; i.e., the maximum value dPmax, at the beginning of the combustion stroke.

Next, the ECU 70 performs feedback control of fuel injection timing on the basis of the pressure increase rate maximum value dPmax (step S223). Combustion in the engine 10 is not a continuous phenomenon, but is a discrete phenomenon. Namely, combustion is one of four strokes (i.e., intake, compression, combustion, and exhaust) performed for each cylinder. Therefore, the feedback control is performed to determine the fuel injection timing in the next combustion cycle. The feedback control of fuel injection timing is performed as follows.

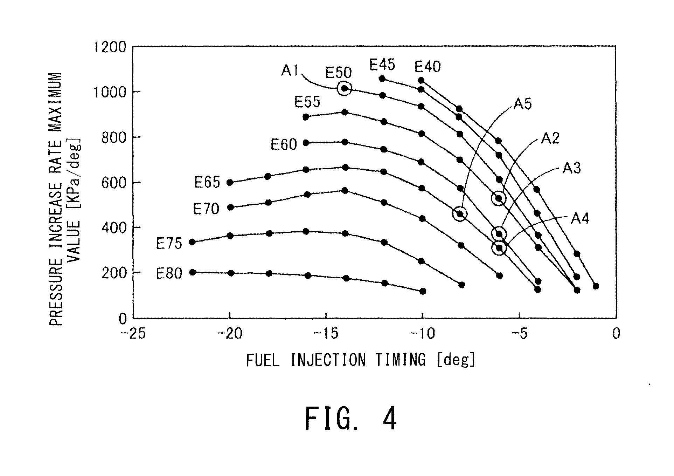

FIG. 4 is a graph showing the relation between the fuel injection timing and the pressure increase rate maximum value dPmax obtained by using the EGR ratio as a parameter. In the drawing, for example, a curve labeled "E50" shows the relation in the case where the EGR ratio is 50%. This graph shows the results of a test in which the pressure increase rate maximum value dPmax was obtained while the fuel injection timing was changed little by little with the EGR ratio fixed. In this example, in the case where the EGR ratio is low (55% or less), the greater the angle by which the fuel injection timing is delayed (the greater the degree to which the fuel injection timing approaches TDC), the smaller the pressure increase rate maximum value dPmax.

In view of the foregoing, in step S223, the ECU 70 estimates the current EGR ratio, in accordance with FIG. 4, from the fuel injection timing and the pressure increase rate maximum value dPmax for the cylinder in which the combustion cycle has been just completed, and obtains a fuel injection timing which renders the pressure increase rate maximum value dPmax in the next combustion cycle smaller than a predetermined value. For example, if the fuel injection timing in the premixed combustion mode in the cylinder in which the combustion cycle has been just completed is -14 [deg], and the pressure increase rate maximum value dPmax is 1000 [kPa/deg] (FIG. 4, combustion point A1), the EGR ratio is estimated to be about 50%. Therefore, it is understood that when the pressure increase rate maximum value dPmax is to be controlled to about 500 [kPa/deg] in the next combustion cycle, the fuel injection timing is set to about - 6 [deg] (combustion point A2). The feedback control of fuel injection timing in step S223 controls the fuel injection timing such that the pressure increase rate maximum value dPmax falls within the range of about 300 to about 500 [kPa/deg].

When the combustion cycle is repeated with the fuel injection timing controlled to the delay side at the beginning of a transition to the premixed combustion mode because the pressure increase rate maximum value dPmax is higher than a target range, the EGR ratio increases gradually, and the pressure increase rate maximum value dPmax decreases gradually. In the case where the fuel injection timing is maintained at -6 [deg], as shown in FIG. 4, the pressure increase rate maximum value dPmax becomes 200 [kPa/deg] or less when the EGR ratio increases to about 70% (combustion point A2 → A3 → A4). In this case, the pressure increase rate maximum value dPmax becomes lower than the lower limit of the target range. Therefore, this time, the pressure increase rate maximum value dPmax is increased by advancing the fuel injection timing (combustion point A4 → A5). This is the feedback control of fuel injection timing based on the pressure increase rate maximum value dPmax shown as step S223. In FIG. 4, data are measured by changing the EGR ratio by 5% at a time. Therefore, combustion points are shown as discrete points. In actual combustion, the EGR ratio, the pressure increase rate maximum value dPmax, the fuel injection timing, etc. assume continuous values, and the combustion points are not limited to those on control curves shown in FIG. 4 for different EGR ratios.

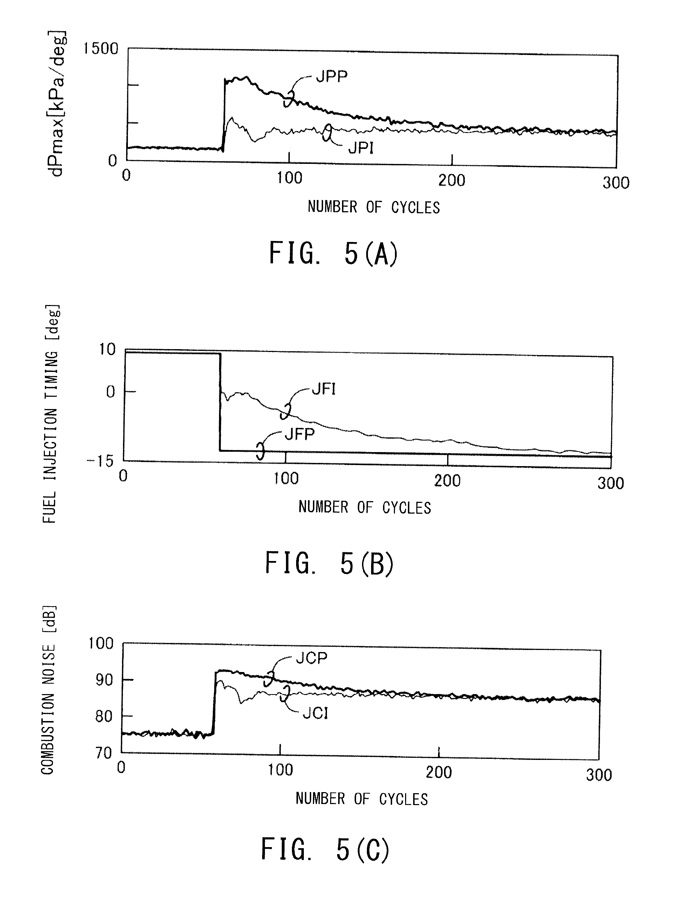

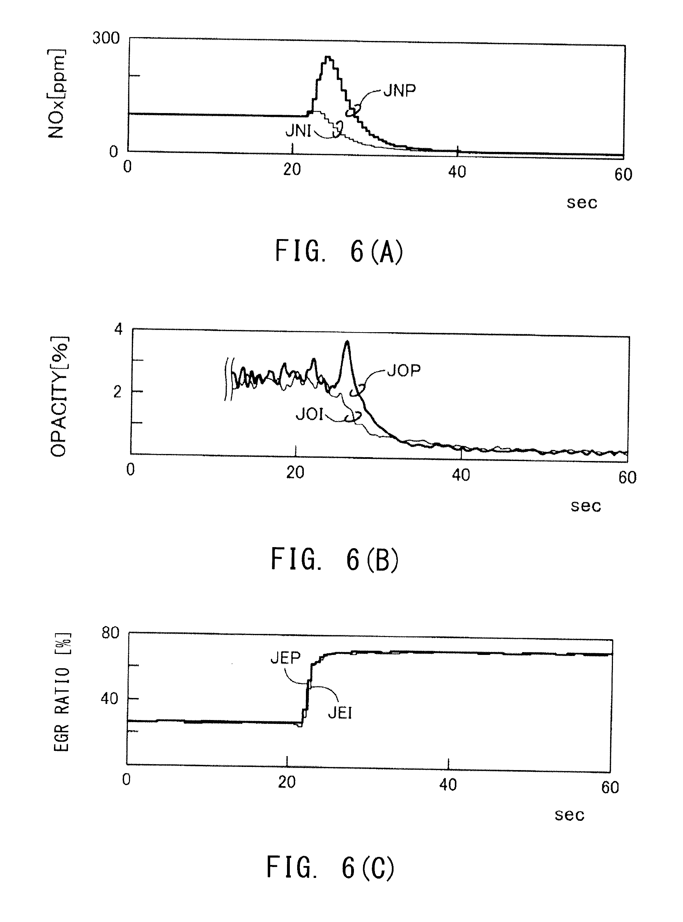

B-3) Effects of first embodiment:
The state of combustion when the above-described fuel injection timing control is performed will be described with reference to FIGS. 5(A) through 5(C) and FIGS. 6(A) through 6(C). FIGS. 5(A) through 5(C) are graphs which show the relation among the pressure increase rate maximum value dPmax, the fuel injection timing, and the combustion noise and in which the horizontal axis shows the number of combustion cycles. FIGS. 6(A) through 6(C) are graphs which show the amount of generated nitrogen oxide (NOx), the opacity representing the amount of generated soot, and the exhaust recirculation ratio (EGR ratio) and in which the horizontal axis shows the elapse of time. FIGS. 5(A) through 5(C) exemplify the case where the combustion mode was switched from the diffusion combustion mode to the premixed combustion mode at a timing near 50 cycles. Of the data shown in FIGS. 5(A) through 5(C) and FIGS. 6(A) through 6(C), the combustion noise was measured through use of a noise meter disposed outside. The amount of NOx was measured through use of the NOx sensor 59, and the opacity was measured through use of the opacity sensor 57. The EGR ratio was computed from the oxygen concentration measured through use of the oxygen concentration sensor 53. Since these sensors are disposed at different locations on the intake-exhaust system 20, the sensors differ from one another in terms of the number of cycles or time between a point in time when the combustion mode is switched to the premixed combustion mode and a point in time when the influence of the switching appears on the output signal. In FIGS. 5(A) through 5(C) and FIGS. 6(A) through 6(C), such differences are corrected.

In FIG. 5(A), a solid line JPI shows the case where the fuel injection timing is feedback-controlled by the present embodiment such that the pressure increase rate maximum value dPmax falls within the target range. Also, a solid line JPP shows the case where the feedback control of fuel injection timing based on the pressure increase rate maximum value dPmax is not performed. In the case where the feedback control of fuel injection timing is not performed, as shown by a sold line JFP in FIG. 5(B), the fuel injection timing is fixed to -14 [deg] with respect to the TDC. In contrast, in the case where the feedback control of fuel injection timing based on the pressure increase rate maximum value dPmax is performed, as shown by a solid line JFI, the fuel injection timing is immediately controlled such that the advance angle becomes small.

When the combustion mode is switched to the premixed combustion mode as described above, the EGR ratio changes from about 25% to about 70% within a short period of time. This change is shown by solid lines JEI and JEP of FIG. 6(C). Notably, as described above, an increase in the EGR ratio immediately after the switching to the premixed combustion mode occurs because the openings of the first EGR valve 37, the second EGR valve 22, and the inter cooler passage throttle valve 18 have been changed. The EGR ratio gradually increases as a result of switching of each valve. A predetermined time (at least several seconds) is necessary for the EGR ratio to reach 70%. Further, since the amount of oxygen remaining in the exhaust gas decreases as a result of performance of the exhaust gas recirculation, the EGR ratio increases gradually. The final EGR ratio in the premixed combustion mode is, for example, about 80%.

As described above, when the combustion mode is switched from the diffusion combustion mode (or motoring) to the premixed combustion mode and the feedback control of fuel injection timing based on the pressure increase rate maximum value dPmax is performed while the EGR ratio is increased, the combustion noise decreases as shown by a solid line JCI in FIG. 5(C). In FIG. 5(C), a solid line JCP shows the combustion noise in the case where the feedback control of fuel injection timing is not performed. As shown in these drawings, the combustion noise was decreased by about 10 [dB] by performing the feedback control of fuel injection timing, as compared with the case where the feedback control of fuel injection timing is not performed.

Also, as shown in FIGS. 6(A) and 6(B), generation of NOx and soot can be suppressed by performing the feedback control of fuel injection timing. In FIG. 6(A), a solid line JNI shows the amount of generated NOx in the case where the feedback control is performed, and a solid line JNP shows the amount of generated NOx in the case where the feedback control is not performed. It is understood that an increase in the amount of generated NOx is suppressed over about 10 seconds after the switching to the premixed combustion mode.

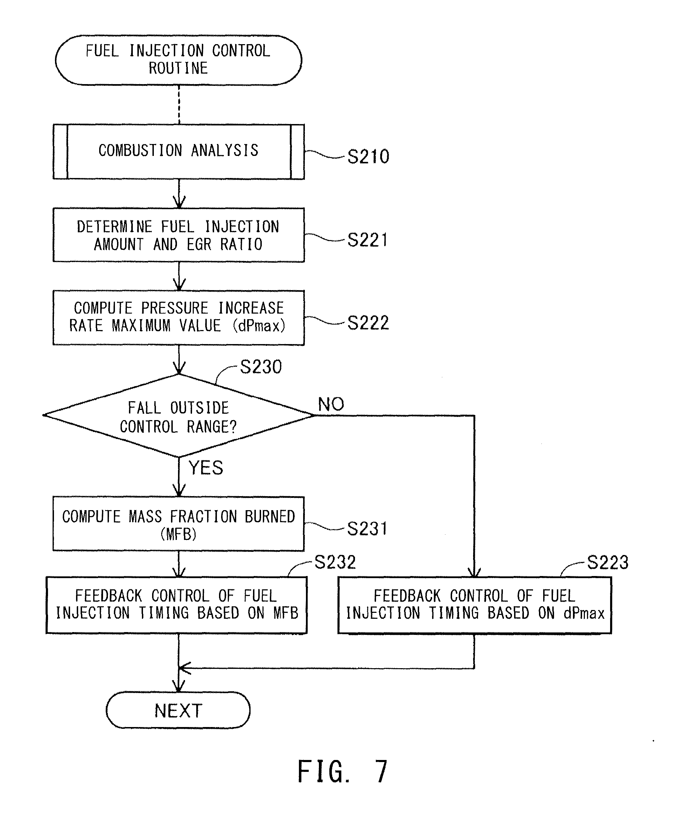

In FIG. 6(B), a solid line JOI shows the opacity in the case where the feedback control is performed, and a solid line JOP shows the opacity in the case where the feedback control is not performed. It is understood that the opacity at the time of switching to the premixed combustion mode is improved. Notably, a decrease in torque was not observed even when the feedback control of fuel injection timing based on the pressure increase rate maximum value dPmax was performed.
C. Second embodiment:
   C-1) Feedback control of fuel injection timing:
      A second embodiment has the same hardware configuration as that of the first embodiment, but differs from the first embodiment in the feedback control of fuel injection timing. FIG. 7 shows the details of the feedback control of fuel injection timing in the second embodiment. Since the control routine shown in FIG. 7 is the same as that of the first embodiment up to step S222 of the control routine shown in FIG. 3, a first half of the control routine is not illustrated.

In the second embodiment, after computing the pressure increase rate maximum value dPmax in step S222, the the ECU 70 determines whether or not the fuel injection timing falls outside a control range for the control based on the pressure increase rate maximum value dPmax (step S230). The fuel injection timing is determined to fall outside the control range when the fuel injection timing having been controlled to the TDC side by the feedback control of fuel injection timing based on the pressure increase rate maximum value dPmax is controlled to the advance side as the pressure increase rate maximum value dPmax decreases, and the fuel injection timing is advanced beyond -14 [deg] in the crank angle.

In the case where the result of the determination in step S230 is "NO"; i.e., in the case where the fuel injection timing is judged to fall within the control range for the control based on the pressure increase rate maximum value dPmax, as in the first embodiment, the ECU 70 performs the feedback control of fuel injection timing based on the pressure increase rate maximum value dPmax (step S223). Meanwhile, in the case where the result of the determination in step S230 is "Yes"; i.e., in the case where the fuel injection timing is judged to fall outside the control range for the control based on the pressure increase rate maximum value dPmax, the ECU 70 performs processing for computing a mass fraction burned (MFB) (step S231). The mass fraction burned (MFB) shows the ratio of the amount of heat Qca released up to a certain crank angle ca to the maximum amount of heat Qmax released in a single combustion cycle. Namely, MFBca = 100·Qca/Qmax. In the second embodiment, MFB30 which is the ratio of the amount of heat released up to a crank angle of 30 degrees is used as the mass fraction burned (MFB).

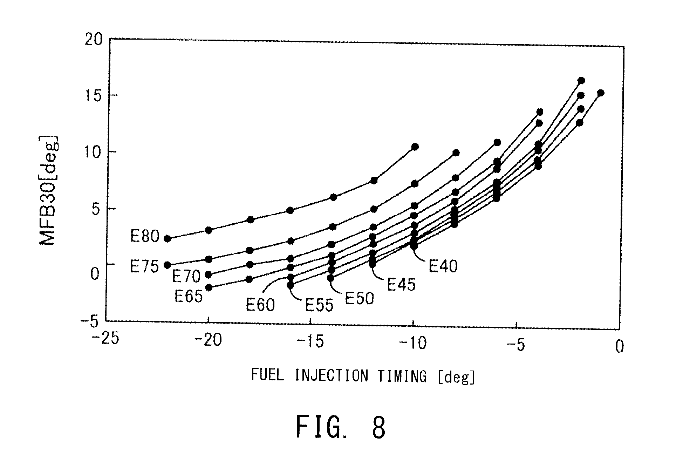

FIG. 8 is a graph which shows the relation between the fuel injection timing and the MFB30 and in which the EGR ratio is used as a parameter. As shown in FIG. 8, the MFB30 increases monotonically with the fuel injection timing over a wide range of -22 degrees or higher in the crank angle ca. In addition, this trend is clearer when the EGR ratio is high. Accordingly, after the computation of the MFB30, the ECU 70 performs the feedback control of fuel injection timing by using this MFB30 (step S232). After that, the ECU 70 goes to a next process "NEXT" to thereby end the present control routine.

According to the above-described engine control apparatus of the second embodiment, the fuel injection timing is controlled as follows. In the case where the combustion mode is switched to the premixed combustion mode and a control for increasing the EGR ratio is performed simultaneously, the feedback control of fuel injection timing based on the pressure increase rate maximum value dPmax is started. After that, when the EGR ratio increases, and the fuel injection timing is advanced to about -14 [deg], the feedback control of fuel injection timing is switched to the feedback control of fuel injection timing based on the MFB30. When the EGR ratio increases, the fuel injection timing is controlled to maintain the pressure increase rate maximum value dPmax constant, whereby the fuel injection timing is controlled to the advance side. After that, upon convergence of the EGR ratio (the oxygen concentration of the intake gas) to a certain value, a change in the pressure increase rate maximum value dPmax when the fuel injection timing is controlled becomes relatively small. Meanwhile, in this region, the MFB30 has a sufficiently high sensitivity to a change in the fuel injection timing. Therefore, in this region, premixed combustion which is higher in thermal efficiency can be performed by performing the feedback control of fuel injection timing through use of the MFB30.
C-2) Effects of second embodiment:

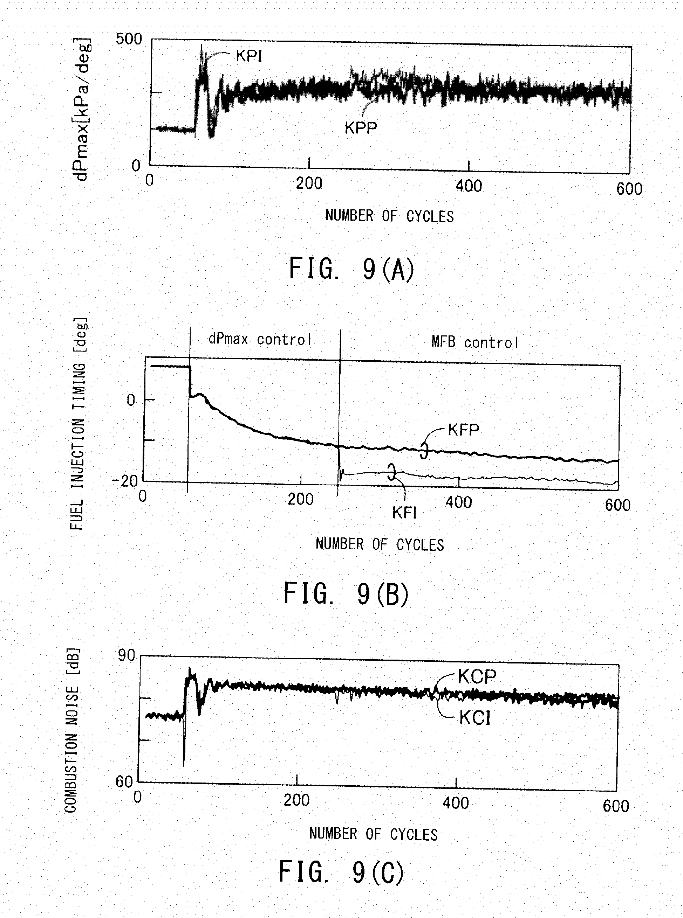

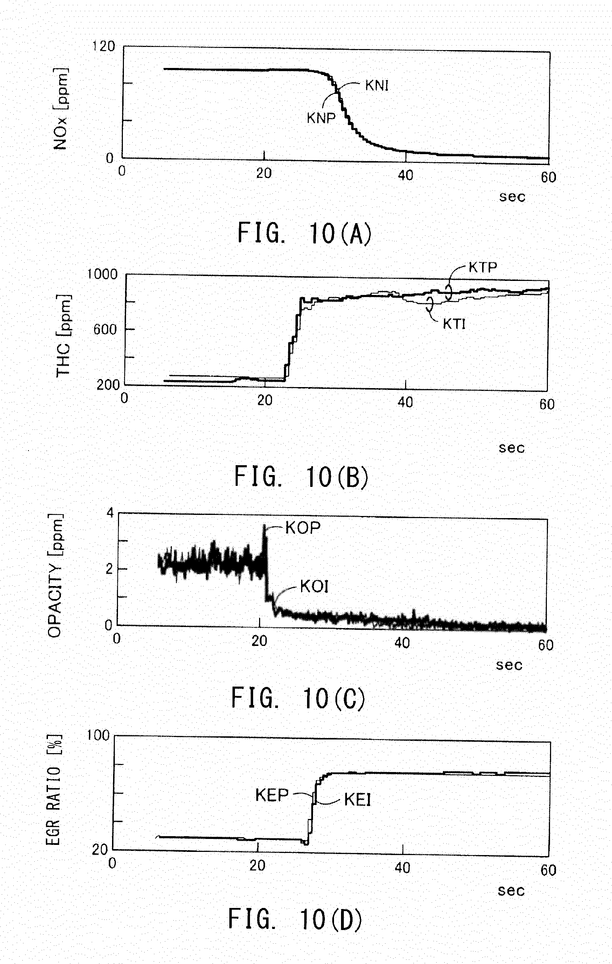

   FIGS. 9(A) through 9(C) and FIGS. 10(A) through 10(D) show a control example in the second embodiment. As in the first embodiment, these drawings show changes in the pressure increase rate maximum value dPmax, the fuel injection timing, the combustion noise, the amount of generated NOx, the opacity, and the EGR ratio when the combustion mode is switched to the premixed combustion mode. FIG. 10(B) shows THC, which is the total amount of hydro carbon. Of the solid lines in each drawing, a solid line denoted by an abbreviated word whose final letter is I shows the characteristic in the second embodiment, and a solid line denoted by an abbreviated word whose final letter is P shows the characteristic in the first embodiment.

As shown in FIG. 9(B), the feedback control of fuel injection timing is switched from the feedback control based on the pressure increase rate maximum value dPmax to the feedback control based on the MFB30 at a timing near 220 cycles. As a result, the fuel injection timing can be controlled to the advance side greatly, as compared with the case where the control based on the pressure increase rate maximum value dPmax is continued (solid line KFP). Also, it is understood that THC is improved. Notably, significant differences were not observed between the combustion noise, NOx, opacity, etc. in the second embodiment and those in the first embodiment.

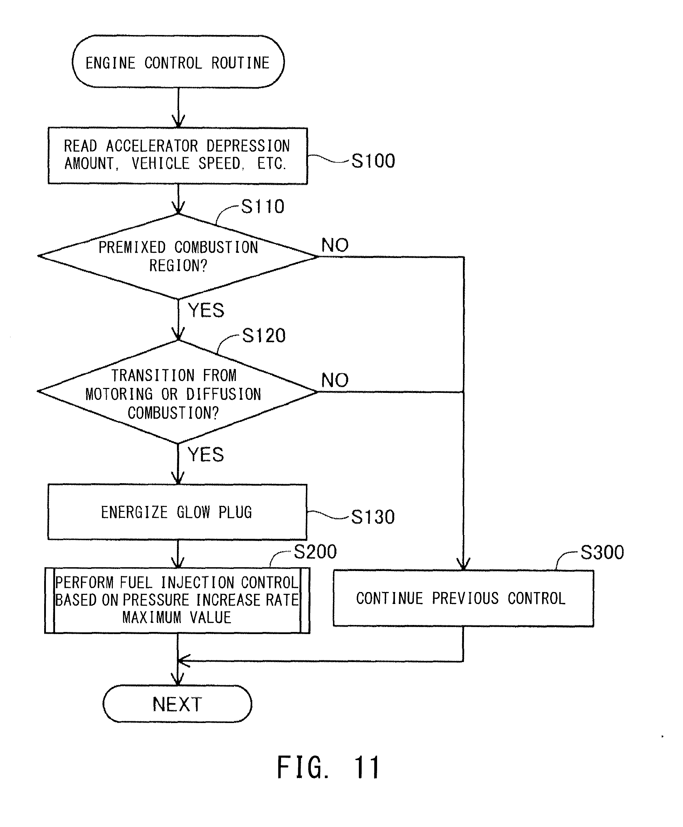

Accordingly, the engine control apparatus of the second embodiment provides not only effects similar to those of the first embodiment, but also a remarkable effect of improving THC. Also, the fuel injection timing can be controlled to the advance side to a grater degree as compared with the first embodiment.
D. Third embodiment:
   Next, a third embodiment of the present invention will be described. As shown in FIG. 11, an engine control apparatus of the third embodiment performs processing similar to that performed in the first embodiment. The third embodiment differs from the first embodiment in that processing for energizing the glow plug (step S130) is performed after step S120. The remaining processing is the same as that in the first embodiment.

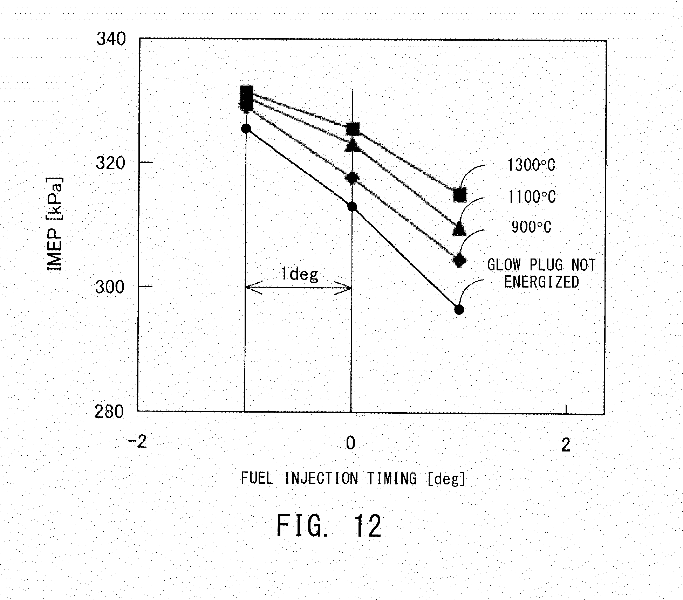

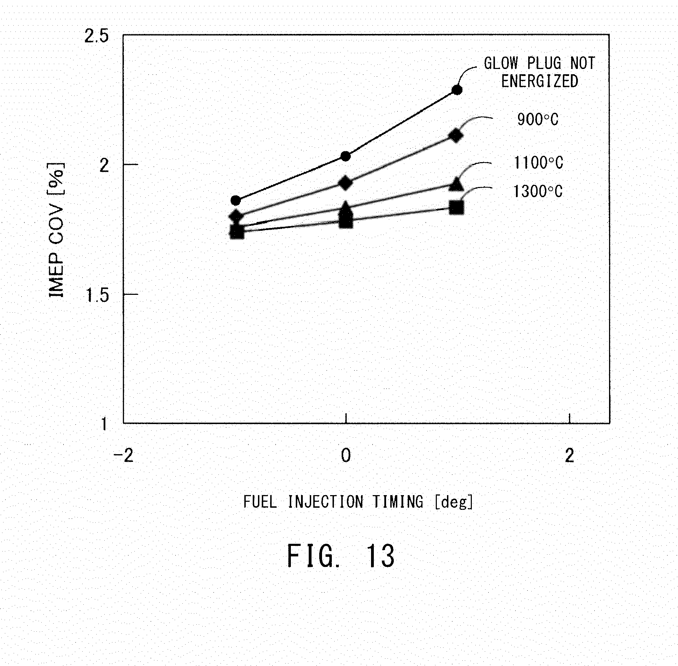

The third embodiment provides the following action and effects in addition to the action and effects of the first embodiment. The engine control apparatus of the third embodiment energizes the glow plug 32 at the time of switching from the diffusion combustion mode (or motoring) to the premixed combustion mode. When the glow plug 32 is energized, it reaches 1200°C within 3 seconds. FIGS. 12 and 13 show changes in torque (indicated means effective pressure (IMEP)) and cycle variation (IMEP COV %) in the case where the temperature inside the cylinder was increased by energizing the glow plug 32. FIG. 12 is a graph which shows the relation between fuel injection timing and torque (indicated means effective pressure (IMEP)) for the case where the EGR ratio is about 40% and in which the elevated temperature of the glow plug 32 is used as a parameter. FIG. 13 is a graph which shows the relation between fuel injection timing and cycle variation (IMEP COV %) for the case where the EGR ratio is about 40% and in which the elevated temperature of the glow plug 32 is used as a parameter. When the temperature within the cylinder exceeds at least 900°C, as shown in FIG. 13, the cycle variation decreases. Accordingly, when comparison is made for the same IMEP value, it is found that the fuel injection timing in the case where the glow plug 32 is energized can be delayed (retarded) by about 1 CA [deg] as compared with the fuel injection timing in the case where the glow plug 32 is not energized.

As can be understood from FIGS. 12 and 13, in the case where the glow plug 32 is energized, torque increases, and the cycle variation of torque is suppressed as compared with the case where the glow plug 32 is not energized. Therefore, even when the fuel injection timing is shifted toward the delay side by at least 1 CA [deg], the same torque and the same cycle variation of torque can be realized. The combustion noise, NOx, THC, and opacity were able to be decreased by controlling the fuel injection timing to the delay side by 1 CA [deg] in the premixed combustion mode.

E. Modifications:
E-1) First modification:
   In the above-described embodiment, the pressure increase rate maximum value dPmax is used as a parameter relating to the cylinder pressure. However, other parameters may be used. For example, a heat release rate maximum value dQmax may be used. A heat release rate dQ corresponds to the amount of heat released per a predetermined crank angle CA, and can be computed from the measured cylinder pressure P at intervals corresponding to the predetermined crank angle CA. Of the computed heat release rates dQ, the largest value in the combustion cycle is referred to as the heat release rate maximum value dQmax. Since the heat release rate maximum value dQmax is a parameter having a strong correlation with the pressure increase rate maximum value dPmax, fuel injection timing control similar to those of the first through third embodiments can be performed through use of the heat release rate maximum value dQmax.

Also, the heat release amount Q or the like can be used. At least one of the combustion noise, NOx, and opacity can be decreased by calculating the heat release amount Q or the like, and feedback-controlling the fuel injection timing such that the calculated heat release amount Q or the like falls within a predetermined target range.

E-2) Second modification:
In the above-described embodiment, the cylinder pressure is measured by the glow plug 32 including a cylinder pressure sensor. However, the cylinder pressure sensor may be provided independently of the glow plug 32. In this case, the layout of the cylinder pressure sensor can be set freely.

E-3) Third modification:
In the above-described embodiment, the feedback control of fuel injection timing is performed under the premise of the control characteristics shown in FIG. 4 or FIG. 8 such that the pressure increase rate maximum value dPmax falls within a predetermined range (e.g., a range of 400 to 800 kPa/deg). However, the feedback control of fuel injection timing may be performed as follows. An upper limit of the pressure increase rate maximum value dPmax is determined (for example, 800 kPa/deg). When the pressure increase rate maximum value dPmax exceeds this upper limit, the fuel injection timing is controlled to the delay side by a predetermined crank angle CA (for example, 2 CA deg), and when the pressure increase rate maximum value dPmax is smaller than the upper limit, the fuel injection timing is controlled to the advance side by a predetermined crank angle CA (for example, 1 CA deg). This method makes it possible to control the fuel injection timing through simple judgment; i.e., by merely comparing the pressure increase rate maximum value dPmax with the upper limit. Notably, hysteresis having a predetermined width may be provided for the upper limit.

E-4) Fourth modification:
In the above-described embodiment, a cylinder pressure sensor is incorporated in the glow plug 32 provided for each cylinder. However, it is not required to provide the cylinder pressure sensor for each of all cylinders of a multi-cylinder engine. For example, in the case of an engine having four cylinders, the cylinder pressure sensor may be provided only for one or two of the four cylinders. The cylinder pressure or pressure increase rate maximum value dPmax of each of the cylinders for which the cylinder pressure sensor is not provided can be estimated from the values obtained for other cylinders. Alternatively, the fuel injection timing of each of the cylinders for which the cylinder pressure sensor is not provided may be controlled to follow the fuel injection timing of the cylinder for which the cylinder pressure sensor is provided.

E-5) Fifth modification:
In the above-described embodiment, the feedback control of fuel injection timing is performed so as to control the fuel injection timing of each cylinder in the next combustion cycle by using the pressure increase rate maximum value dPmax or the heat release rate maximum value dQmax of the cylinder. However, instead of controlling the fuel injection timing of the same cylinder in the next combustion cycle, the feedback control may control the fuel injection timing of another cylinder; for example, a cylinder for which fuel injection is performed next. Also, in the case where computation of the fuel injection timing is not completed in time, the computed fuel injection timing may be applied to a combustion cycle following the next combustion cycle. Notably, the control of fuel injection timing performed through use of the pressure increase rate maximum value dPmax or the like is not limited to feedback control, and all types of PID controls may be applied. In the case where the reproducibility of variation of a parameter with change of the fuel injection timing can be obtained sufficiently, open-loop control may be used.

E-6) Other modifications:
In the above-described embodiment, the glow plug 32 uses ceramic heater. However, the glow plug 32 may use a metal heater.

The number of cylinders of the diesel engine is not limited to four, and the diesel engine includes any number of cylinders. For example, the diesel engine may be a single-cylinder diesel engine or a multi-cylinder diesel engine such as a six-cylinder diesel engine.

In the above-described embodiment, the target range to which the pressure increase rate maximum value dPmax is feedback-controlled is determined such that at least one of combustion noise, NOx, and opacity is decreased. However, the target range may be determined to decrease other parameters such as carbon monoxide CO.

The present invention is not limited to the above-described embodiments and modifications, but may be embodied in various other forms without departing from the spirit of the invention. For example, in order to solve, partially or entirely, the above-mentioned problem or yield, partially or entirely, the above-mentioned effects, technical features of the embodiments and modifications corresponding to technical features of the modes described in the section "Summary of the Invention" can be replaced or combined as appropriate. Also, the technical feature(s) may be eliminated as appropriate unless the present specification mentions that the technical feature(s) is mandatory.

### [Description of Reference Numerals]

10: diesel engine
11: gear wheel
12: intake pipe
14: intake valve
15: turbocharger
17: inter cooler
18: inter cooler passage throttle valve
20: intake-exhaust system
21: manifold
22: second EGR valve
24: fuel supply pump
26: common rail
30: fuel injection valve
32: glow plug
33: branch pipe
34: oxidation catalyst
36: DPF
37: first EGR valve
38: exhaust shutter
51: intake gas temperature sensor
52: intake pressure sensor
53: oxygen concentration sensor
55: exhaust gas temperature sensor
57: opacity sensor
59: NOx sensor
61: accelerator sensor
62: accelerator
64: vehicle speed sensor
70: ECU
71: CPU
72: ROM
73: RAM
74: CAN
75: input port
76: output port
80: in-vehicle LAN
100: diesel engine control apparatus

## Claims

1. A diesel engine control apparatus (FIG. 1, 100) for controlling fuel injection timing of a diesel engine, comprising:
a cylinder pressure sensor (incorporated in a glow plug 32 of FIG. 1) for detecting cylinder pressure of the diesel engine (FIG. 1, 10) ;
a parameter computation unit (FIG. 1, 70; FIG. 3, step S222) for computing a parameter (dPmax, etc.) which is related to change in the cylinder pressure of the diesel engine obtained from a signal output from the cylinder pressure sensor; and
a control unit (FIG. 1, 70; FIG. 4, step S223) for controlling the fuel injection timing at the time when combustion in the diesel engine (10) is switched to premixed combustion such that the parameter falls within a target range.

2. A diesel engine control apparatus according to claim 1, wherein the switching to the premixed combustion is performed in a state in which diffusion combustion is performed or in a motoring state (FIG. 3, step S120).

3. A diesel engine control apparatus according to claim 1 or 2, wherein
the parameter computation unit (FIG. 1, 70) computes, as the parameter, a mass fraction burned, and a pressure increase rate maximum value of the cylinder pressure or a heat release rate maximum value on the basis of the signal from the cylinder pressure sensor (FIG. 7, steps S222, S231); and
the control unit (FIG. 1, 70) performs fuel injection timing control based on the mass fraction burned (FIG. 7, step S232) when the fuel injection timing converges as a result of control based on the pressure increase rate maximum value or the heat release rate maximum value (FIG. 7, step S230).

4. A diesel engine control apparatus (FIG. 1, 100) for controlling fuel injection timing of a diesel engine, comprising:
a cylinder pressure sensor (incorporated in a glow plug 32 of FIG. 1) for detecting cylinder pressure of the diesel engine (FIG. 1, 10); and
a control unit (FIG. 1, 70; FIG. 3, step S222) for controlling the fuel injection timing on the basis of a pressure increase rate maximum value or a heat release rate maximum value obtained from a signal from the cylinder pressure sensor.

5. A diesel engine control apparatus according to claim 4, wherein the control unit (FIG. 1, 70) controls the fuel injection timing at the time when combustion in the diesel engine is switched to premixed combustion such that the pressure increase rate maximum value or the heat release rate maximum value falls within a target range (FIG. 3, S222).

6. A diesel engine control apparatus according to any one of claims 1 to 5, wherein the cylinder pressure sensor is incorporated into a glow plug provided on the diesel engine (FIG. 1, 32).

7. A diesel engine control apparatus according to claim 6, wherein the glow plug is energized such that the glow plug has a temperature of 900°C or higher (FIG. 11, S130) when the diesel engine is operated by premixed combustion (FIG. 11, S120).

8. A diesel engine control apparatus according to claim 7, wherein the glow plug has a temperature increase speed such that the glow plug reaches 1200°C within a period of 0.5 sec to 3 sec.

9. A method for controlling fuel injection timing of a diesel engine, comprising:
detecting cylinder pressure of the diesel engine (FIG. 3, S202);
computing a parameter which is related to change in the cylinder pressure of the diesel engine on the basis of the detected cylinder pressure (FIG. 3, S222); and
controlling the fuel injection timing at the time when combustion in the diesel engine is switched to premixed combustion such that the parameter falls within a target range (FIG. 3, S223).

10. A method for controlling fuel injection timing of a diesel engine, comprising:
detecting cylinder pressure of the diesel engine (FIG. 3, S202); and
controlling the fuel injection timing on the basis of a pressure increase rate maximum value or a heat release rate maximum value obtained from the cylinder pressure (FIG. 3, S223).
